# EUROPEAN PATENT APPLICATION

(11) **EP 2 644 569 A1**
(43) Date of publication of application: **02.10.2013**
(21) Application number: 12182607.7
(22) Date of filing: 31.08.2012
(51) Int. Cl.: C01F 11/28, C01F 11/32

(54) **Method for producing high-purity barium chloride with low strontium and high-purity barium chloride with low strontium**

(30) Priority: 30.03.2012 CN 201210090722
(71) Applicant: Guizhou Redstar Developing Co., Ltd., Guizhou 561206 (CN); Shenzhen Haoyitong Investment And Development Co., Ltd., Guangdong 518000 (CN)
(72) Inventor: Jiang, Zhiguang, 561206 Anshun City (CN); Hua, Dong, 402368 Dazu County (CN); Liu, Xiangyu, 561206 Anshun City (CN)
(74) Representative: Eterno, Enrico

(57) **Abstract**

The present invention provides a method for producing high-purity barium chloride with low strontium and high-purity barium chloride with low strontium. The method comprises following processes: reacting: adding barium carbonate and hydrochloric acid into acid-resistant reactor under agitation to carry out reaction, keeping temperature at 55-60°C, controlling the reaction so as to make pH value of reaction solution at endpoin in a range of 3.5-4.0, after completing reaction, separating solid from liquid to obtain clear filtration containing barium chloride as liquid phase; adjusting process by excess acid: adding the clear filtration containing barium chloride obtained by separation into acid-resistant reactor, adding hydrochloric acid slowly under agitation, controlling [H⁺] at 2.0-6.0mol/L, cooling the solution until the temperature of the solution is lower than 35°C, then separating solid from liquid, obtaining barium chloride crystal as solid phase; dissolving and removing impurities: dissolving the obtained barium chloride crystal with water to prepare saturated solution at a temperature of 80-90°C, adding hydrogen peroxide, heating the solution to slightly boil, then neutralizing the solution with barium hydroxide to pH 7.0-7.5, separating solid from liquid, obtaining barium chloride-containing solution as liquid phase; and separating and drying: transferring the obtained liquid phase into cooling crystallizer, cooling slowly to 38-42°C, then separating solid from liquid, and drying the obtained solid to obtain the barium chloride product. The purity of high-purity barium chloride with low strontium obtained by the method is equal to 99.60% or more, and Sr content is lower than 10ppm.

## Description

### Technical field

The present invention relates to a method for producing high-purity barium chloride with low strontium and high-purity barium chloride with low strontium obtained by the method.

### Background art

High-purity barium chloride is mainly used for preparing high-purity barium carbonate and high-purity barium titanate material. With needs of low-temperature sintering in MLCC, higher requirements for strontium content of barium titanate and barium carbonate are put forward.

Traditional method for producing high-purity barium chloride comprises dissolving barium carbonate with hydrochloric acid, and then recrystallizing to obtain barium chloride. The yield of barium chloride by the method is very low, particularly, total yield of eligible product is less than 30% when producing high-purity barium chloride with Sr<20ppm, thus production capacity of production installations is greatly restricted, which results in that cost is high and energy consumption is large.

### Summary of the invention

The technical problem solved by the present invention is low yield of barium chloride with low strontium when it is produced by prior methods.

The technical problem of low yield of barium chloride with low strontium is solved by using the process of common-ion effect and dissolving clear solution of barium chloride by excess acid in the present invention.

Specifically, in order to solve the foregoing technical problem, the present invention provides technical solutions as follows.

A method for producing barium chloride is characterized in comprising following processes:

1) reacting process: adding barium carbonate and hydrochloric acid into acid-resistant reactor under agitation to carry out reaction, keeping system temperature at 55-60°C, controlling the reaction so as to make pH value of reaction solution at endpoint in a range of 3.5-4.0, after completing reaction, separating solid from liquid to obtain clear filtration containing barium chloride as liquid phase, and putting it into the following process;

2) adjusting process by excess acid: adding the clear filtration containing barium chloride obtained by separation from process 1) into acid-resistant reactor, adding hydrochloric acid slowly under agitation, controlling [H⁺] in a range of 2.0-6.0mol/L, cooling the solution until the temperature of the solution reaches less than 35°C, then separating solid from liquid, and putting obtained barium chloride crystal as solid phase into the following process;

3) dissolving and removing impurities process: dissolving the barium chloride crystal obtained by separation with water to prepare saturated solution at a temperature of 80-90°C, adding hydrogen peroxide, heating the solution to slightly boil, then neutralizing the solution with barium hydroxide to pH 7.0-7.5, separating solid from liquid, and putting obtained liquid phase into the following process; and

4) separating and drying process: transferring the above liquid phase obtained by separation into cooling crystallizer, cooling slowly to 38-42°C, then separating solid from liquid, and drying the solid to obtain the barium chloride product.

The method for producing barium chloride as above described, wherein, [H⁺] is controlled in a range of 3.5-5.0mol/L in the adjusting process by excess acid 2).

The method for producing barium chloride as above described, wherein, during the reaction process 1), after barium chloride-containing solution as liquid phase obtained by solid-liquid separation during the adjusting process by excess acid 2) is recycled and added back into the acid-resistant reactor, the solution is heated to a temperature of 40-70°C, perfectly 55-60°C, and then barium carbonate and hydrochloric acid are further added under agitation to carry out reaction.

The method for producing barium chloride as above described, wherein, during the dissolving and removing impurities process 3), saturated solution at a temperature of 85°C is prepared; and during the separating and drying process 4), the liquid phase is cooled slowly to 40°C.

The method for producing barium chloride as above described, wherein, during the separating and drying process 4), mother liquor obtained by solid-liquid separation is recycled back into foregoing dissolving and removing impurities process.

The method for producing barium chloride as above described, wherein, during the dissolving and removing impurities process 3), after hydrogen peroxide is added, the solution is heated to slightly boil and then kept slightly boiling for 12-18 minutes, perfectly 15 minutes.

The method for producing barium chloride as above described, wherein, during the reacting process 1), the method of said heating may be jacket-heating; and/or during the adjusting processby excess acid 2), the method of said cooling may be jacket-cooling; and/or during the dissolving and removing impurities process 3), the method of heating statured solution may be jacket-heating; and/or during the separating and drying process 4), the method of cooling to crystallize may be jacket-cooling to crystallize.

The method for producing barium chloride as above described, wherein, during the reacting process 1) and/or the dissolving and removing impurities process 3), the method of said solid-liquid separation is pressure-filtering separation.

The present invention also provides a barium chloride obtained by foregoing producing methods.

The barium chloride as above described, by weight, purity thereof is equal to 99.60% or more, and strontium content thereof is lower than 8.3ppm.

The process technologies of common-ion effect and dissolving clear solution of barium chloride by excess acid are used in the present invention for producing high-purity barium chloride product with low strontium, which results in high yield and low cost, and the yield of eligible product is greater than 75%, wherein impurities content is very low, specifically, strontium content is less than 10ppm, K content and Na content are both less than 5.0ppm, Ca content is less than 20.0ppm, Mg content is less than 10.0ppm and Fe content is less than 1.0ppm.

### Brief Description of the Drawings

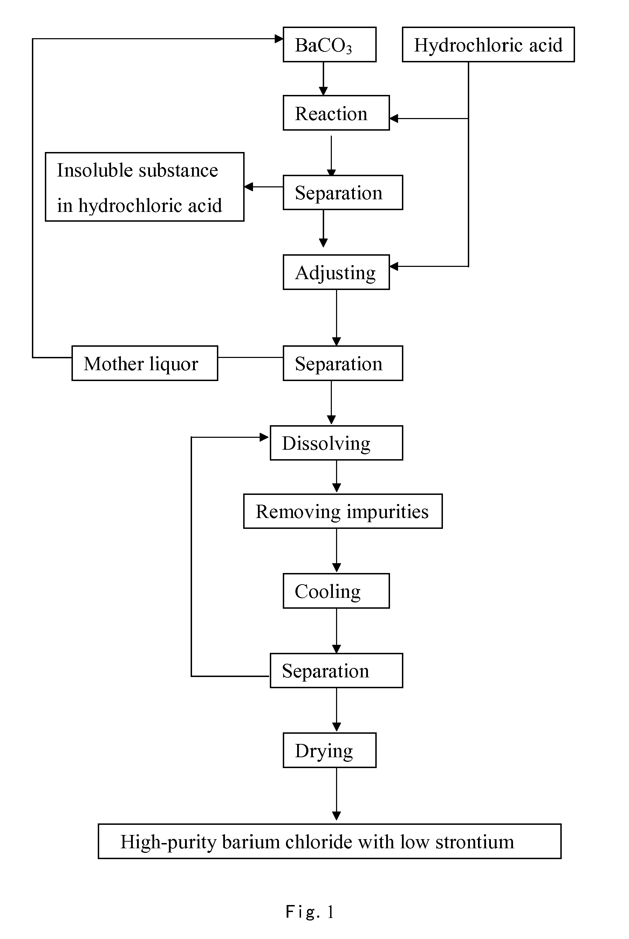

Fig1. Process flow diagram for producing barium chloride with low strontium of the present invention. Embodiments

In the present invention common-ion effect is applied by adding hydrochloric acid into barium chloride solution, and the process of using excess acid to promote the production of barium chloride is used, so that the yield of barium chloride with low strontium is increased, and production cost is reduced.

Specifically, as shown in the process flow in figure 1, in a particular embodiment, a method for producing barium chloride in the present invention comprises the following processes:

1) reacting process: adding barium carbonate and hydrochloric acid into acid-resistant reactor under agitation to carry out reaction, keeping system temperature at 55-60°C, controlling the reaction so as to make pH value of reaction solution at endpoint in a range of 3.5-4.0, after completing reaction, separating solid from liquid to obtain clear filtration containing barium chloride as liquid phase;

Wherein, reaction equation involved in the reacting process is shown as follows:

BaCO₃+HCl→BaCl₂+CO₂↑+H₂O

Wherein, the hydrochloric acid used in the reacting process may be industrial hydrochloric acid.

2) adjusting process by excess acid: adding the clear filtration containing barium chloride obtained by separation from process 1) into acid-resistant reactor, adding hydrochloric acid slowly under agitation, controlling [H⁺] in a range of 2.0-6.0mol/L (preferably controlling [H⁺] at 3.0-5.0mol/L), cooling the solution until the temperature of the solution reaches less than 35°C (preferably equal to 25°C or more), then separating solid from liquid, and putting barium chloride crystal as solid phase into the next operation.

Wherein, preferably, during the reacting process 1), after barium chloride-containing solution as liquid phase obtained by solid-liquid separation during the adjusting process by excess acid 2) is recycled and added back into the acid-resistant reactor, the solution is heated to a temperature of 40-70°C, perfectly 55-60°C, and then barium carbonate and hydrochloric acid are further added under agitation to carry out reaction.

Wherein, concentration of barium chloride in the recycled barium chloride-containing solution is not specially required, and usually the concentration of barium chloride in the recycled barium chloride-containing solution is about 240∼270g/L. Moreover, solution amount is increased because of water introduced by hydrochloric acid in the reacting process 1), according to change of strontium content of the system, mother liquor is neutralized with barium carbonate and then evaporated and crystallized to produce common barium chloride product, (usually Sr content is higher than 1500ppm). Specifically, good separation effect can be usually reached in the adjusting process by excess acid 2), when the strontium content of the mother liquor is usually higher than 1000ppm and lower than 3000ppm; the mother liquor is not fit for producing high-purity barium chloride of the present invention and the mother liquor is fit for producing common barium chloride by evaporating and crystallizing after neutralizing with barium carbonate, when the strontium content of the mother liquor is too high such as 4000ppm.

3) dissolving and removing impurities process: dissolving the barium chloride crystal obtained by separation with pure water to prepare saturated solution at a temperature of 80-90°C (preferably 85°C), adding hydrogen peroxide, heating the solution to slightly boil and keeping slightly boiling for 12-18min preferably (more preferably 15min), then neutralizing the solution with barium hydroxide to pH 7.0-7.5, separating solid from liquid, and putting obtained liquid phase into the following process.

Wherein, reaction equation involved in the dissolving and removing impurities process is shown as follows:

Fe²⁺+H₂O₂ Fe (OH) 3↓+H₂O

4) separating and drying process: transferring the above liquid phase obtained by separation into cooling crystallizer, cooling slowly to 38-42°C (preferably 40°C), separating solid from liquid, recycling mother liquor into the dissolving and removing impurities process, and drying the solid to obtain the barium chloride product.

Wherein, with the increase of recycle times of mother liquor, impurity content of the product may increase accordingly, and the mother liquor may be evaporated at regular intervals to produce middle-grade barium chloride product. Specifically, the mother liquor may be used for producing high-purity barium chloride (BaCl₂•2H₂O) with low strontium of the present invention, when strontium content of the mother liquor is in the range of 200∼400ppm, wherein, preferably, when strontium content of the mother liquor is lower than 200ppm, the mother liquor is used for producing high-purity barium chloride with low strontium. When the strontium content of mother liquor is greater than 400ppm, the mother liquor is used for producing middle grade barium chloride product.

In a particular embodiment, during the reacting process 1), the method of said heating is jacket-heating and/or during the adjusting process by excess acid 2), the method of said cooling is jacket-cooling.

In another particular embodiment, during the reacting process 1) and/or druing the dissolving and removing impurities process 3), the method of said solid-liquid separation is pressure-filtering separation.

In the present invention common-ion effect is applied by adding hydrochloric acid into barium chloride solution, so that the yield of high-purity barium chloride with low strontium is increased and the production cost is reduced.

The following specific examples are used for describing the method for producing high-purity barium chloride with low strontium of the present invention. Examples

The purity of chemical reagents and determination method involved in the examples of the present invention are stated as follows:

Barium carbonate: purity 99.3%, Sr content 1800-4000ppm;

Industrial hydrochloric acid: content of HCl is 37%.

Industrial hydrogen peroxide: hydrogen peroxide content is 27.5%

Method for determining and analyzing content of elements K, Na, Ca, Mg, Fe and Sr: inductively coupled plasma atomic emission spectrometry (ICP-AES).

Devices for analysis of elements: Inductively Coupled Plasma Atomic Emission Spectrometry, IRIS Intrepid II XSP, manufactured by Thermo Electron Corporation of America.

pH-meter: precise acidimeter, PHS-3C, manufactured by Shanghai Precision Instrument Co. Ltd.

Method for determining concentration of H⁺: acid-base titration.

Method for determining barium chloride purity: the determination of barium chloride content according to EDTA method in GB/T 652-2003.

### Example 1

1) Reacting process: Firstly, 2L recycled mother liquor containing a small quantity of barium chloride (barium chloride content is about 240g/L) was added into acid-resistant reactor, the solution was heated to a temperature of 55°C with jacket-heating, barium carbonate and industrial hydrochloric acid are added under agitation to carry out reaction, system temperature was kept at 55°C, the reaction was controlled so as to make pH value of reactive solution at endpoint reached 3.5, the reactive solution after completing reaction was separated by pressure-filtration, and clear filtrate was obtained and put into next operation.

2) Adjusting process by excess acid: Clear filtrate of barium chloride obtained by pressing-filtration was added into acid-resistant reactor, industrial hydrochloric acid was slowly added under agitation, [H⁺] was controlled at 3.0mol/L, the solution was jacket-cooled until the temperature of the solution reached 32°C, solid phase and liquid phase were separated, the solid phase was put into the next operation and the liquid phase was recycled back into the reacting process.

Solution amount was increased because of water introduced by hydrochloric acid in the reacting process, depending on change of strontium content of the system determined during the production process, mother liquor was neutralized with barium carbonate and then evaporated and crystallized to produce common barium chloride product, when Sr content was higher than 3000ppm.

3) Dissolving and removing impurities process: Barium chloride crystal obtained by separation was dissolved with pure water to prepare saturated solution at a temperature of 85°C, a small quantity of industrial hydrogen peroxide was added (hydrogen peroxide content is 27.5%), the solution was heated to slightly boil and kept at this temperature for 15min, the solution was neutralized to pH 7.2 with a small quantity of barium hydroxide, and the solution was separated by pressure-filteration .

4) Separating and drying process: foregoing clear filtration obtained by pressure-filtering separation was transferred into cooling crystallizer, cooled slowly to 42°C, solid and liquid are then separated, mother liquor was recycled back into foregoing dissolving and removing impurities process, and the solid was dried to obtain sample 1^{#} of high-purity barium chloride BaCl₂•2H₂O.

With the increase of recycle times of mother liquor, impurity content of the product increased accordingly, and the mother liquor may be evaporated at regular intervals to produce middle-grade barium chloride product when the strontium content of the mother liquor was higher than 400ppm.

### Example 2

1) Reacting process: Firstly, 2L recycled mother liquor containing a small quantity of barium chloride (barium chloride content is about 270g/L) was added into acid-resistant reactor, the solution was heated to a temperature of 60°C with jacket-heating, barium carbonate and industrial hydrochloric acid were added under agitation to carry out reaction, system temperature was kept at 60°C, the reaction was controlled so as to make pH value of reactive solution at endpoint reached 4.0, the reactive solution after completing reaction was separated by pressure-filtration and clear filtrate was obtained and put into next operation.

2) Adjusting process by excess acid: Clear filtrate of barium chloride obtained by pressing-filtration was added into acid-resistant reactor, industrial hydrochloric acid was slowly added under agitation, [H⁺] was controlled at 4.5 mol/L, the solution was jacket-cooled until the temperature of the solution reached 25°C, solid phase and liquid phase were separated, the solid phase was put into the next operation and the liquid phase was recycled back into the reacting process.

Solution amount was increased because of water introduced by hydrochloric acid in the reacting process, depending on change of strontium content of the system determined during the production process, mother liquor was neutralized with barium carbonate and then evaporated and crystallized to produce common barium chloride product, when Sr content was higher than 3000ppm.

3) Dissolving and removing impurities process: Barium chloride crystal obtained by separation was dissolved with pure water to prepare saturated solution at a temperature of 80°C, a small quantity of industrial hydrogen peroxide was added, the solution was heated to slightly boil and kept at this temperature for 12min, the solution was neutralized to pH 7.0 with a small quantity of barium hydroxide, and the solution was separated by pressure-filteration .

4) Separating and drying process: foregoing clear filtration obtained by pressure-filtering separation was transferred into cooling crystallizer, cooled slowly to 40°C, solid and liquid were then separated, the mother liquor was recycled back into foregoing dissolving and removing impurities process, and the solid was dried to obtain sample 2# of high-purity barium chloride BaCl₂•2H₂O.

With the increase of recycle times of mother liquor, impurity content of the product increased accordingly, and the mother liquor may be evaporated at regular intervals to produce middle-grade barium chloride product when the strontium content of the mother liquor was higher than 400ppm.

### Example 3

1) Reacting process: Firstly, 2L recycled mother liquor containing a small quantity of barium chloride (barium chloride content is about 260g/L) was added into acid-resistant reactor, the solution was heated to a temperature of 60°C with jacket-heating, barium carbonate and industrial hydrochloric acid were added under agitation to carry out reaction, system temperature was kept at 60°C, the reaction was controlled so as to make pH value of reactive solution at endpoint reached 3.8, the reactive solution after completing reaction was separated by pressure-filtration, and clear filtrate was obtained and put into next operation.

2) Adjusting process by excess acid: Clear filtrate of barium chloride obtained by pressing-filtration was added into acid-resistant reactor, industrial hydrochloric acid was slowly added under agitation, [H⁺] was controlled at 5.0 mol/L, the solution was jacket-cooled until the temperature of the solution reached 30°C, solid phase and liquid phase are separated, the solid phase was put into the next operation and the liquid phase was recycled back into the reacting process.

Solution amount was increased because of water introduced by hydrochloric acid in the reacting process depending on change of strontium content of the system determined during the production process, mother liquor was neutralized with barium carbonate and then evaporated and crystallized to produce common barium chloride product, when Sr content was higher than 3000ppm.

3) Dissolving and removing impurities process: Barium chloride crystal obtained by separation was dissolved with pure water to prepare saturated solution at a temperature of 90°C, a small quantity of industrial hydrogen peroxide was added, the solution was heated to slightly boils and kept at this temperature for 18min, the solution was neutralized to pH 7.5 with a small quantity of barium hydroxide, and the solution was separated by pressure-filteration .

4) Separating and drying process: foregoing clear filtration obtained by pressure-filtering separation was transferred into cooling crystallizer, cooled slowly to 38°C, solid and liquid were then separated, the mother liquor was recycled back into foregoing dissolving and removing impurities process, and the solid was dried to obtain sample 3^{#} of high-purity barium chloride BaCl₂•2H₂O.

With the increase of recycle times of mother liquor, impurity content of the product increased accordingly, and the mother liquor may be evaporated at regular intervals to produce middle-grade barium chloride product when the strontium content of the mother liquor was higher than 400ppm.

### Example 4

1) Reacting process: Firstly, 2L recycled mother liquor containing a small quantity of barium chloride (barium chloride content is about 250g/L) was added into acid-resistant reactor, the solution was heated to a temperature of 40°C with jacket-heating, barium carbonate and industrial hydrochloric acid were added under agitation to carry out reaction, system temperature was kept at 57°C, the reaction was controlled so as to make pH value of reactive solution at endpoint reached 3.8, the reactive solution after completing reaction was separated by pressure-filtration and clear filtrate was obtained and put into next operation.

2) Adjusting process by excess acid: Clear filtrate of barium chloride obtained by pressing-filtration was added into acid-resistant reactor, industrial hydrochloric acid was slowly added under agitation, [H⁺] was controlled at 2.0 mol/L, the solution was jacket-cooled until the temperature of the solution reached 32°C, solid phase and liquid phase were separated, the solid phase was put into the next operation and the liquid phase was recycled back into the reacting process.

Solution amount was increased because of water introduced by hydrochloric acid in the reacting process, depending on change of strontium content of the system determined during the production process, mother liquor was neutralized with barium carbonate and then evaporated and crystallized to produce common barium chloride product, when Sr content was higher than 3000ppm.

3) Dissolving and removing impurities process: Barium chloride crystal obtained by separation was dissolved with pure water to prepare saturated solution at a temperature of 82°C, a small quantity of industrial hydrogen peroxide was added, the solution was heated to slightly boils and kept at this temperature for 16min, the solution was neutralized to pH 7.5 with a small quantity of barium hydroxide, and the solution was separated by pressure-filteration .

4) Separating and drying process: foregoing clear filtration obtained by pressure-filtering separation was transferred into cooling crystallizer, cooled slowly to 39°C, solid and liquid were then separated, mother liquor was recycled back into foregoing dissolving and removing impurities process, and the solid was dried to obtain sample 4^{#} of high-purity barium chloride BaCl₂•2H₂O.

With the increase of recycle times of mother liquor, impurity content of the product increased accordingly, and the mother liquor may be evaporated at regular intervals to produce middle-grade barium chloride product when the strontium content of the mother liquor was higher than 400ppm.

### Example 5

1) Reacting process: Firstly, 2L recycled mother liquor containing a small quantity of barium chloride (barium chloride content is about 260g/L) was added into acid-resistant reactor, the solution was heated to a temperature of 70°C with jacket-heating, barium carbonate and industrial hydrochloric acid were added under agitation to carry out reaction, system temperature was kept at 58°C, the reaction was controlled so as to make pH value of reactive solution at endpoint reached 4.0, the reactive solution after completing reaction was separated by pressure-filtration and clear filtrate was obtained and put into next operation.

2) Adjusting process by excess acid: Clear filtrate of barium chloride obtained by pressing-filtration was added into acid-resistant reactor, industrial hydrochloric acid was slowly added under agitation, [H⁺] was controlled at 6.0 mol/L, the solution was jacket-cooled until the temperature of the solution reached 30°C, solid phase and liquid phase were separated, the solid phase was put into the next operation and the liquid phase was recycled back into the reacting process.

Solution amount was increased because of water introduced by hydrochloric acid in the reacting process, depending on change of strontium content of the system determined during the production process, mother liquor was neutralized with barium carbonate and then evaporated and crystallized to produce common barium chloride product, when Sr content was higher than 3000ppm.

3) Dissolving and removing impurities process: Barium chloride crystal obtained by separation was dissolved with pure water to prepare saturated solution at a temperature of 85°C, a small quantity of industrial hydrogen peroxide was added, the solution was heated to slightly boil and kept at this temperature for 15min, the solution was neutralized to pH 7.0 with a small quantity of barium hydroxide, and the solution was separated by pressure-filteration.

4) Separating and drying process: foregoing clear filtration separated by pressing-filtrating separation was transferred into cooling crystallizer, cooled slowly to 42°C, solid and liquid were then separated, the mother liquor was recycled back into foregoing dissolving and removing impurities process, and the solid was dried to obtain sample 5^{#} of high-purity barium chloride BaCl₂•2H₂O.

With the increase of recycle times of mother liquor, impurity content of the product increased accordingly, and the mother liquor may be evaporated at regular intervals to produce middle-grade barium chloride product when the strontium content of the mother liquor was higher than 400ppm.

Purity and content of each impurity element of samples 1∼5^{#}obtained in foregoing examples were determined respectively and the results were collected in following table 1.

**Table 1 Determination results of samples 1∼5^{#}**

| Items | 1^{#} | 2^{#} | 3^{#} | 4^{#} | 5^{#} |
|---|---|---|---|---|---|
| BaCl₂ content % | 99.81 | 99.74 | 99.70 | 99.84 | 99.60 |
| K ppm | <5.0 | <5.0 | <5.0 | <5.0 | <5.0 |
| Na ppm | <5.0 | <5.0 | <5.0 | <5.0 | <5.0 |
| Ca ppm | <20.0 | <20.0 | <20.0 | <20.0 | <20.0 |
| Mg ppm | <10.0 | <10.0 | <10.0 | <10.0 | <10.0 |
| Fe ppm | <1.0 | <1.0 | <1.0 | <1.0 | <1.0 |
| Sr ppm | 7.2 | 7.4 | 8.1 | 7.0 | 8.3 |

It may see from foregoing determination results, in the present invention, common-ion effect is applied by adding hydrochloric acid into barium chloride solution, and the process of using excess acid to promote the production of barium chloride is used, so that yield of high-purity barium chloride with low strontium is increased, the purity is more than 99.60%, even reaches 99.84%, and Sr content is lower than 8.3ppm, even can be lower than 7.0ppm.

## Claims

1. A method for producing barium chloride is **characterized in** comprising following processes:
1) reacting process: adding barium carbonate and hydrochloric acid into acid-resistant reactor under agitation to carry out reaction, keeping system temperature at 55-60°C, controlling the reaction so as to make pH value of reaction solution at endpoint in a range of 3.5-4.0, after completing reaction, separating solid from liquid to obtain clear filtration containing barium chloride as liquid phase, and putting it into the following process;
2) adjusting process by excess acid: adding the clear filtration containing barium chloride obtained by separation from process 1) into acid-resistant reactor, adding hydrochloric acid slowly under agitation, controlling [H⁺] in a range of 2.0-6.0mol/L, cooling the solution until the temperature of the solution reaches less than 35°C, then separating solid from liquid, and putting obtained barium chloride crystal as solid phase into the following process;
3) dissolving and removing impurities process: dissolving barium chloride crystal obtained by separation with water to prepare saturated solution at a temperature of 80-90°C, adding hydrogen peroxide, heating the solution to slightly boil, then neutralizing the solution with barium hydroxide to pH 7.0-7.5, separating solid from liquid and putting obtained liquid phase into the following process; and
4) separating and drying process: transferring the above liquid phase obtained by separation into cooling crystallizer, cooling slowly to 38-42°C, then separating solid from liquid, and drying the solid to obtain the barium chloride product.

2. The method for producing barium chloride according to claim 1, wherein, [H⁺] is controlled in a range of 3.5-5.0mol/L during the adjusting process by excess acid 2).

3. The method for producing barium chloride according to claim 1 or 2, wherein, during the reaction process 1), after barium chloride-containing solution as liquid phase obtained by solid-liquid separation during the adjusting process by excess acid 2) is recycled and added back into the acid-resistant reactor, the solution is heated to a temperature of 40-70°C, perfectly 55-60°C, and then barium carbonate and hydrochloric acid are further added under agitation to carry out reaction.

4. The method for producing barium chloride according to claim 3, wherein, during the dissolving and removing impurities process 3), saturated solution at a temperature of 85°C is prepared; and during the separating and drying process 4), the liquid phase is cooled slowly to 40°C.

5. The method for producing barium chloride according to claim 3 or 4, wherein, during the separating and drying process 4), mother liquor obtained by solid-liquid separation is recycled back into foregoing dissolving and removing impurities process.

6. The method for producing barium chloride according to any one of claims 3-5, wherein, during the dissolving and removing impurities process 3), after hydrogen peroxide is added, the solution is heated to slightly boil and kept slightly boiling for 12-18 minutes, perfectly 15 minutes.

7. The method for producing barium chloride according to any one of claims 1-6, wherein, the concentration of barium chloride in the barium chloride-containing solution recycled by solid-liquid separation during the adjusting process by excess acid 2) is 240∼270g/L.

8. The method for producing barium chloride according to claim 7, wherein, in the reacting process 1) and/or the dissolving and removing impurities process 3), the method of said solid-liquid separation is pressure-filtering separation.

9. Barium chloride obtained by the methods according to any one of claims 1-8.

10. Barium chloride according to claim 9, by weight, purity thereof is equal to 99.60% or more, and strontium content thereof is lower than 8.3ppm.
